# EUROPEAN PATENT APPLICATION

(11) **EP 4 391 141 A1**
(43) Date of publication of application: **26.06.2024**
(21) Application number: 23216462.4
(22) Date of filing: 13.12.2023
(51) Int. Cl.: H01M 10/0585, H01M 50/184, H01M 50/186, H01M 50/197, H01M 50/627, H01M 50/636, H01M 10/04

(54) **METHOD FOR PRODUCING LAYERED BATTERY, AND LAYERED BATTERY**

(30) Priority: 20.12.2022 JP 2022203535
(71) Applicant: TOYOTA JIDOSHA KABUSHIKI KAISHA, Toyota-shi, Aichi-ken, 471-8571 (JP)
(72) Inventor: OKURA, Toshinori, Toyota-shi, 471-8571 (JP); TERANISHI, Tadashi, Toyota-shi, 471-8571 (JP); MORI, Hideto, Toyota-shi, 471-8571 (JP)
(74) Representative: D Young & Co LLP

(57) **Abstract**

A main object of the present disclosure is to provide a method for producing a layered battery with which a layered battery with high structural reliability can be produced. The present disclosure achieves the object by providing the method including: a preparing step of preparing an electrode layered body including a plurality of electrode layered in a z axis direction; an arranging step of arranging a liquid injection frame made of a resin including a liquid injection port, in a side surface of the electrode layered body; a liquid injection step of injecting a liquid electrolyte into the electrode layered body from the liquid injection port of the liquid injection frame; a first sealing step of sealing the liquid injection port by arranging a first member including a resin layer A on a surface of the liquid injection frame, of which normal direction is an x axis direction orthogonal to the z axis direction, after the liquid injection step; a battery treatment step of performing at least one of charging and aging after the first sealing step; a penetration hole forming step of forming a penetration hole communicating the liquid injection port in the first member after the battery treatment step; and a second sealing step of sealing the liquid injection port while covering the penetration hole by using a second member including a resin layer B and a metal layer, and arranging the resin layer B in the second member on a surface of the first member of which normal direction is the x axis direction.

## Description

### Technical Field

The present disclosure relates to a method for producing a layered battery, and a layered battery.

### Background Art

A technique of sealing a surrounding of an electrode layered body including a plurality of electrode with a resin body has been known. For example, Patent Literature 1 discloses a bipolar battery wherein there is at least one or more of a series configuration of a cathode and an anode combination, and an outside part of a battery element is covered with at least one or more of a resin group, in a bipolar structure battery including a detection tab.

Also, Patent Literature 2 discloses a method for producing a secondary battery characterized in that a battery charging step, a degassing step and an aging step are performed in a state both sides of a pair of wide surface of a battery case are sandwiched and the battery case is restrained by pressurizing the battery case in the sandwiched direction.

Patent Literature 3 discloses a method for producing a power storage device including a step of filling a resin between, a layered body in which the frame body is joined to the peripheral edge of each electrode plate of a plurality of bipolar electrodes, and a nest holder, in a state a nest, of which one end extends into the frame adjacent in the layered direction and the other end is held by a nest holder outside the frame, is interposed.

### Citation List

### Patent Literatures

Patent Literature 1: Japanese Patent Application Laid-Open (JP-A) No. 2005-005163
Patent Literature 2: JP-A No. 2010-021104
Patent Literature 3: JP-A No. 2019-016459

### Summary of Disclosure

### Technical Problem

On the occasion of producing a layered battery including an electrode layered body in which a plurality of electrode is layered in a z axis direction (thickness direction), a liquid electrolyte is injected into an internal space of each power generating unit. In this case, due to design constraints, a liquid injection frame made of a resin, in which a plurality of liquid injection port configured to supply the liquid electrolyte into each internal space, may be arranged along a side surface of the electrode layered body. After injecting the liquid electrolyte, the liquid injection port of the liquid injection frame needs to be sealed. Here, when a sealing member including a metal layer is arranged on the liquid injection port to weld and seal the liquid injection port, barrier properties can be obtained and contamination of moistures inside the battery is presumably inhibited. However, in a battery treatment such as a charging treatment and an aging treatment after the sealing, internal pressure of the electrode layered body may increase to cause breakage of the liquid injection frame including the liquid injection port, which may lead to occurrence of leakage of the liquid electrolyte and result in degrade of structural reliability.

The present disclosure has been made in view of the above circumstances, and a main object thereof is to provide a method for producing a layered battery with which a layered battery with high structural reliability can be produced.

### Solution to Problem

[1] A method for producing a layered battery, the method comprising:
   a preparing step of preparing an electrode layered body including a plurality of electrode layered in a z axis direction;
   an arranging step of arranging a liquid injection frame made of a resin including a liquid injection port, in a side surface of the electrode layered body;
   a liquid injection step of injecting a liquid electrolyte into the electrode layered body from the liquid injection port of the liquid injection frame;
   a first sealing step of sealing the liquid injection port by arranging a first member including a resin layer A on a surface of the liquid injection frame, of which normal direction is an x axis direction orthogonal to the z axis direction, after the liquid injection step;
   a battery treatment step of performing at least one of charging and aging after the first sealing step;
   a penetration hole forming step of forming a penetration hole communicating the liquid injection port in the first member after the battery treatment step; and
   a second sealing step of sealing the liquid injection port while covering the penetration hole by using a second member including a resin layer B and a metal layer, and arranging the resin layer B in the second member on a surface of the first member of which normal direction is the x axis direction.
[2] The method for producing a layered battery according to [1], wherein the first member and the second member are in a film shape.
[3] The method for producing a layered battery according to [1] or [2], wherein the first member includes a plurality of resin layer as the resin layer A.
[4] The method for producing a layered battery according to any one of [1] to [3], wherein the second member includes a resin layer C on the metal layer that is opposite side to the resin layer B.
[5] The method for producing a layered battery according to any one of [1] to [4], wherein the electrode layered body includes a bipolar electrode including a current collector, a cathode layer arranged on one surface of the current collector, and an anode layer arranged on the other surface of the current collector.
[6] A layered battery comprising:
   an electrode layered body including a plurality of electrode layered in a z axis direction;
   a liquid injection frame made of a resin that is arranged in a side surface of the electrode layered body, and includes a liquid injection port configured to supply a liquid electrolyte into the electrode layered body;
   a first member of which normal direction is an x axis direction orthogonal to the z axis direction, arranged on a surface of the liquid injection frame that is opposite side to the electrode layered body; and
   a second member of which normal direction is the x axis direction, arranged on a surface of the first member that is opposite side to the liquid injection frame, wherein
   the first member includes a resin layer A, and a penetration hole covering the liquid injection port and communicating the liquid injection port; and
   the second member includes layers in the order of a resin layer B and a metal layer from the first member side, and seals the liquid injection port while covering the penetration hole.
[7] The layered battery according to [6], wherein the first member and the second member are in a film shape.
[8] The layered battery according to [6] or [7], wherein the first member includes a plurality of resin layer as the resin layer A.
[9] The layered battery according to any one of [6] to [8], wherein the second member includes a resin layer C on the metal layer that is opposite side to the resin layer B.
[10] The layered battery according to any one of [6] to [9], wherein the electrode layered body includes a bipolar electrode including a current collector, a cathode layer arranged on one surface of the current collector, and an anode layer arranged on the other surface of the current collector.

### Advantageous Effects of Disclosure

The method for producing a layered battery in the present disclosure can produce a layered battery with high structural reliability.

### Brief Description of Drawings

FIGS. 1A to 1F are schematic cross-sectional views exemplifying the method for producing a layered battery in the present disclosure.
FIG. 2 is a schematic cross-sectional view exemplifying the electrode layered body in the present disclosure.
FIG. 3 is a schematic perspective view exemplifying the liquid injection frame in the present disclosure.
FIG. 4 is a schematic cross-sectional view exemplifying the electrode layered body in which the liquid injection frame is arranged in the present disclosure.
FIG. 5 is a schematic cross-sectional view exemplifying the temporary sealed layered body in the present disclosure.
FIGS. 6A and 6B are schematic cross-sectional views exemplifying an electrode layered body preparing step in the method for producing a layered battery in the present disclosure.
FIGS. 7A to 7C are schematic cross-sectional views exemplifying a liquid injection frame arranging step in the method for producing a layered battery in the present disclosure.
FIGS. 8A and 8B are schematic cross-sectional views exemplifying a liquid injection frame arranging step in the method for producing a layered battery in the present disclosure.
FIG. 9 is a schematic cross-sectional view exemplifying a layered battery in which the liquid injection frame is directly welded and sealed with a sealing member including a metal layer.
FIG. 10 is a schematic cross-sectional view exemplifying the layered battery in the present disclosure.

### Description of Embodiments

The embodiments in the present disclosure will be hereinafter explained in details with reference to drawings. Each drawing described as below is a schematic view, and the size and the shape of each portion are appropriately exaggerated in order to be understood easily. Furthermore, in the present description, upon expressing an embodiment of arranging one member with respect to the other member, when it is expressed simply "on" or "below", both of when the other member is directly arranged on or below the one member so as to contact with each other, and when the other member is arranged above or below the one member interposing an additional member, can be included unless otherwise described.

### A. Method for producing layered battery

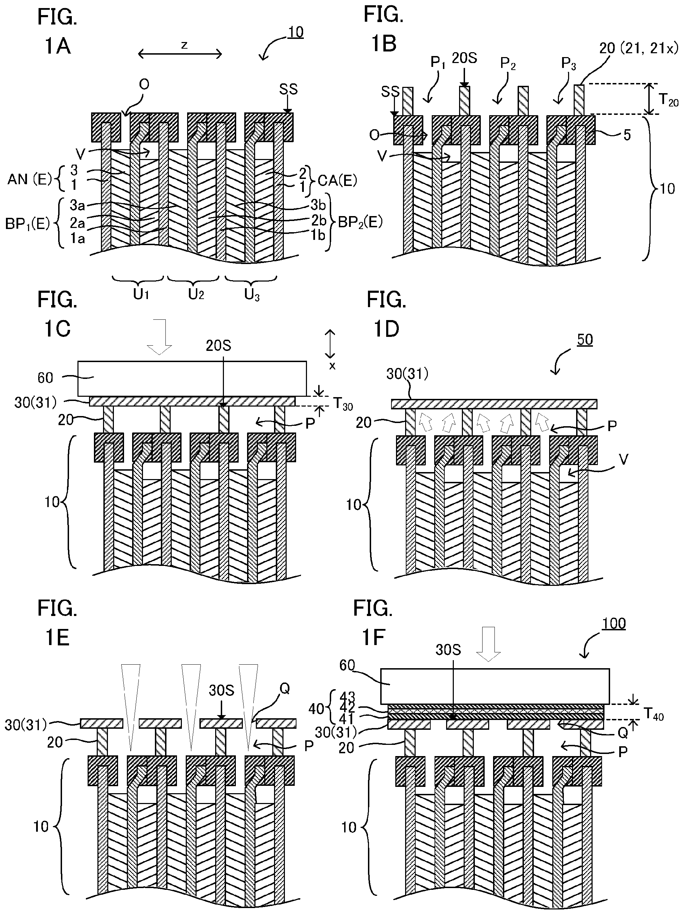

FIGS. 1A to 1F are schematic cross-sectional views exemplifying the method for producing a layered battery in the present disclosure. First, as shown in FIG. 1A, an electrode layered body including a plurality of electrode E layered in a z axis direction is prepared (a preparing step). As shown in FIG. 1A, usually, communicating hole O communicating to inside electrode layered body 10 is formed in side surface SS of the electrode layered body 10. Next, as shown in FIG. 1B, liquid injection frame 20 made of a resin including a plurality of liquid injection port P configured to inject a liquid electrolyte into the electrode layered body 10 is arranged in the side surface SS of the electrode layered body 10 (an arranging step). Next, a liquid electrolyte (not illustrated) is injected into the electrode layered body from the liquid injection port P of the liquid injection frame 20 (a liquid injection step). After the liquid injection step, as shown in FIG. 1C, the liquid injection port P of the liquid injection frame 20 is sealed by arranging first member 30 including resin layer A (resin layer 31) on surface 20S of the liquid injection frame 20 that is opposite side to the electrode layered body 10, of which normal direction is an x axis direction orthogonal to the z axis direction (a first sealing step). Thereby, temporary sealed layered body 50 is obtained.

At least one of charging and aging is performed to the temporary sealed layered body 50 after the first sealing step as shown in FIG. 1D (a battery treatment step). On this occasion, gas is generated inside the electrode layered body 10 to increase the internal pressure of the temporary sealed layered body 50. A penetration hole Q communicating the liquid injection port P is formed in the first member 30 after the battery treatment step as shown in FIG. 1E (a penetration hole forming step). Thereby, the sealed state of the temporary sealed layered body 50 is released and the increased internal pressure is decreased. After the penetration hole forming step, as shown in FIG. 1F, the liquid injection port P is sealed while covering the penetration hole Q by using second member 40 including resin layer B (resin layer 41) and metal layer 42, and arranging the resin layer B (resin layer 41) in the second member 40 on surface 30S of the first member 30 that is an opposite side to the liquid injection frame 20, of which normal direction is the x axis direction (a second sealing step). Thereby, layered battery 100 is obtained.

As described above, by sealing the liquid injection port of the liquid injection frame using a sealing member including a metal layer, the contamination of moistures inside the battery can be presumably inhibited. In particular, in a case of a large-scaled battery, since even the contamination of a little amount of moisture leads to deterioration of the battery overall, the sealing member preferably includes high barrier properties. However, when the battery treatment, at least one of charging and aging, is performed to the sealed body after the sealing, gas is generated inside the electrode layered body to increase the internal pressure of the sealed body, which may result in the breakage of the liquid injection frame. As a result, problems such as leakage of the liquid electrolyte may occur to degrade the structural reliability.

According to the present disclosure, the penetration hole forming step (FIG. 1E) is performed to arrange the penetration hole Q in the first member 30 after the battery treatment step (FIG. 1D), and thus the sealed state of the temporary sealed layered body 50 is released to reduce the increased internal pressure. After that, by sealing the liquid injection port P of the liquid injection frame 20 while covering the penetration hole Q of the first member 30 with the second member 40 (FIG. 1F), a layered battery of which degrade in structural reliability is inhibited is obtained.

Also, according to the present disclosure, a layered battery capable of inhibiting peeling between the first member and the second member can be produced. In specific, when the penetration hole Q of the first member 30 is covered with the second member 40 in the second sealing step (FIG. 1F), gas may be interposed between the first member 30 and the second member 40, but the gas may be released from the penetration hole Q formed in the first member 30. When there is gas accumulation, when the battery is exposed to high temperature in a market, peeling occurs between the first member and the second member.

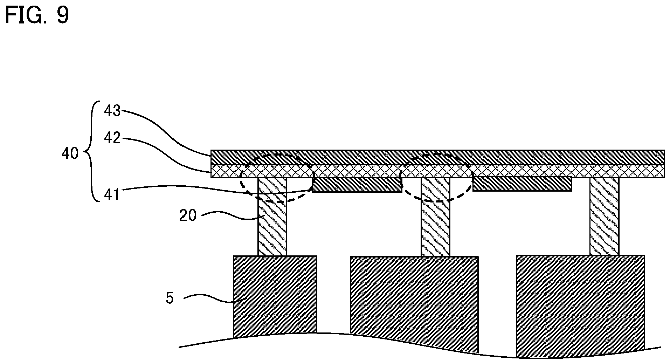

Further, according to the present disclosure, a layered battery capable of inhibiting short circuit can be produced. FIG. 9 shows a schematic cross-sectional view of a layered battery in which the liquid injection port of the liquid injection frame is directly sealed with a sealing member including a metal layer. Here, the sealing member 40 generally includes resin layer B (resin layer 41) and metal layer 42. In this case, when the conditions for welding and sealing are excessive, a resin included in the resin layer B (resin layer 41) is melted and flows to expose of the metal layer 42. When the exposed metal layer 42 (inside the dot line) directly contact the liquid electrolyte having a different potential, short circuit may occur. In particular, when the welding and sealing are performed under reduced pressure, since the pressure inside the battery becomes negative pressure, the conditions for welding and sealing may be excessive in order to secure the welding strength. On the other hand, according to the present disclosure, as shown in FIGS. 1A to 1F, since the first member 30 is arranged between the liquid injection frame 20 and the second member 40, even when the sealing member including a metal layer is used as the second member 40 and the metal layer 42 is exposed, short circuit can be inhibited because there is a distance to the adjacent liquid injection port.

Also, according to the present disclosure, the penetration hole is formed in the first member, and thus the conditions for welding and sealing in the second sealing step can be lightened.

### 1. Preparing step

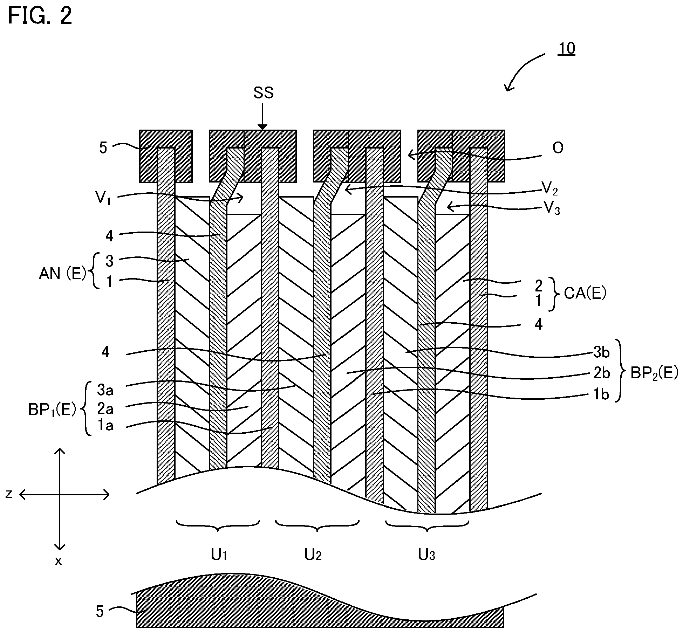

This step is a step of preparing an electrode layered body including a plurality of electrode layered in a z axis direction (FIG. 1A). FIG. 2 is a schematic cross-sectional view exemplifying the electrode layered body in the present disclosure. As shown in FIG. 2, the electrode layered body 10 includes a plurality of electrode E layered in a z axis direction. The electrode includes a current collector, and an electrode layer (cathode layer or anode layer) arranged on at least one surface of the current collector.

As shown in FIG. 2, the electrode layered body 10 may include, as the electrode E, bipolar electrode BP including current collector 1, cathode layer 2 arranged in one surface of the current collector 1, and anode layer 3 arranged on the other surface of the current collector 1. The electrode layered body in the present disclosure may include just one of the bipolar electrode BP, and may include or two more thereof. Meanwhile, the electrode layered body in the present disclosure is not particularly limited if it includes a plurality of electrode E layered in the z axis direction, and may not include the bipolar electrode.

The electrode layered body in the present disclosure may be provided with a plurality of bipolar electrode in the z axis direction, and in the plurality of bipolar electrode, a separator may be respectively arranged between adjacent bipolar electrodes.

The electrode layered body 10 shown in FIG. 2 includes, as the electrode E, bipolar electrode BP₁, bipolar electrode BP₂, cathode side end electrode CA, and anode side end electrode AN. The bipolar electrode BP₁ includes cathode layer 2a arranged on one surface of current collector 1a, and anode layer 3a arranged on the other surface of the current collector 1a. The bipolar electrode BP₂ includes cathode layer 2b arranged on one surface of current collector 1b, and anode layer 3b arranged on the other surface of the current collector 1b. The cathode side end electrode CA includes current collector 1, and cathode layer 2 arranged on one surface of the current collector 1. The anode side end electrode AN includes current collector 1, and anode layer 3 arranged on one surface of the current collector 1.

As shown in FIG. 2, the electrode layered body 10 may include a plurality of power generating unit U (U₁, U₂, U₃) layered in the z axis direction. The power generating unit U includes cathode layer 2, anode layer 3, and separator 4 arranged between the cathode layer 2 and the anode layer 3. As shown in FIG. 2, the plurality of power generating unit U (U₁, U₂, U₃) may be connected in series to each other. Also, although not illustrated in particular, the plurality of power generating unit may be connected in parallel to each other. The plurality of power generating unit is each independent so that the liquid electrolyte does not flow to each other. In FIG. 2, the plurality of power generating unit U (U₁, U₂, U₃) is each independent so that the liquid electrolyte does not flow to each other. Also, the plurality of power generating unit U (U₁, U₂, U₃) respectively includes internal space V (V₁, V₂, V₃). For example, the power generating unit U₁ and the power generating unit U₂ are divided by the current collector 1 and resin member 5, and thus each independent.

One power generating unit may be configured by two bipolar electrodes. In FIG. 2, the electrode layered body 10 includes bipolar electrode BP₁ and bipolar electrode BP₂ in the z axis direction. Separator 4 is arranged between adjacent bipolar electrode BP₁ and bipolar electrode BP₂. The power generating unit U₂ is configured by cathode layer 2 in the bipolar electrode BP₂, anode layer 3 in the bipolar electrode BP₁, and the separator 4 arranged therebetween. Meanwhile, the power generating unit U₁ is configured by cathode layer 2 in the bipolar electrode BP₁, anode layer 3 in the anode side end electrode AN, and the separator 4 arranged therebetween. Also, the power generating unit U₃ is configured by anode layer 3 in the bipolar electrode BP₂, cathode layer 2 in the cathode side end electrode CA, and the separator 4 arranged therebetween.

In the plurality of power generating unit, usually a communicating hole is respectively formed. As shown in FIG. 2, the communicating hole O is, for example, formed to penetrate the resin member 5 in an x axis direction orthogonal to the z axis direction, and preferably communicates the internal space V of the power generating unit U and the liquid injection port P of the liquid injection frame 20 described later.

The electrode layered body in the present disclosure may include a resin member arranged along the outer periphery of the plurality of current collector. For example, in FIG. 2, the resin member 5 is arranged along with the outer periphery of the current collector 1. When the electrode layered body 10 is viewed from the z axis direction, the resin member 5 is a member to inhibit the leak of the liquid electrolyte, and usually arranged in an entire outer periphery of the current collector 1. Examples of the resin configuring the resin member may include a thermoplastic resin. Examples of the thermoplastic resin may include olefin-based resin such as polyethylene and polypropylene. The resin member in the present disclosure usually includes, as shown in FIG. 2, communicating hole O that communicates the internal space V (V₁, V₂, V₃) of the power generating unit U (U₁, U₂, U₃) and the liquid injection port P of the liquid injection frame 20 described later. The communicating hole O extends to the x axis direction, and preferably penetrates the resin member 5. Also, the resin member 5 usually includes a plurality of communicating hole O.

The shape of the electrode layered body in a plan view (shape when viewed from the z axis direction) is not particularly limited, and examples thereof may include a square shape such as foursquare and rectangular. The length of one side of the shape of the electrode layered body in a plan view is, for example, 30 cm or more, may be 50 cm or more, and may be 100 cm or more. Meanwhile, the length of the one side is, for example, 200 cm or less. Also, when the shape of the electrode layered body in a plan view is rectangular, it is preferable that the length of the shorter side is in the above range. Also, in the rectangular, the length of the longer side with respect to the shorter side (aspect ratio) is more than 1.0, and may be 1.2 or more. Meanwhile, the aspect ratio is, for example, 3.0 or less.

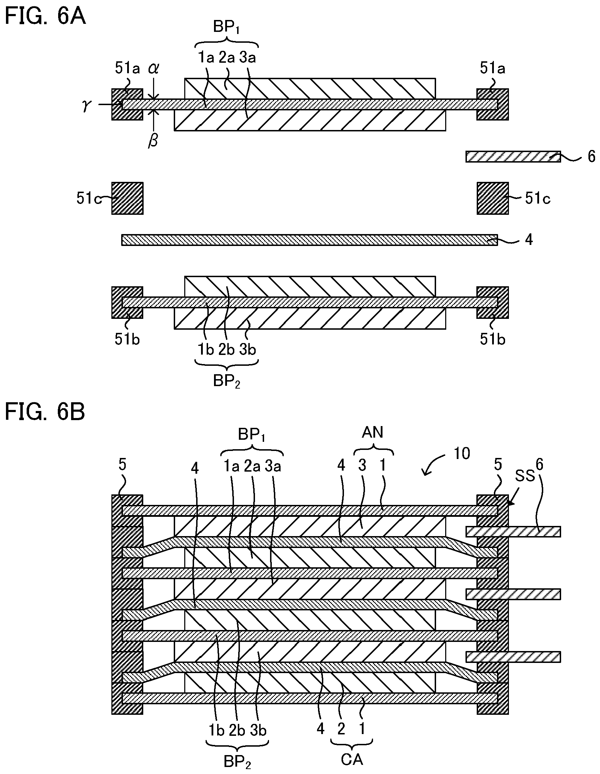

There are no particular limitations on the method for producing the electrode layered body. FIGS. 6A and 6B are schematic cross-sectional views (deal drawings) exemplifying the method for producing the electrode layered body in the present disclosure. As shown in FIG. 6A, bipolar electrode BP₁ and bipolar electrode BP₂ are prepared. The bipolar electrode BP₁ includes cathode layer 2a arranged on one surface of current collector 1a, and anode layer 3a arranged on the other surface of the current collector 1a.

Further, the bipolar electrode BP₁ includes resin frame 51a arranged along with the outer periphery of the current collector 1a. When the bipolar electrode BP₁ is viewed from the z axis direction, the resin frame 51a is usually arranged along with the entire outer periphery of the current collector 1a. For example, when the shape of the outer periphery of the current collector 1a is square, the resin frame 51a is arranged along with the entire outer periphery of that square. Also, as shown in FIGS. 6A and 6B, the resin frame 51a preferably covers a part of one main surface α of the current collector 1a, a part of the other main surface β of the current collector 1a, and the whole of side surface γ configuring the outer periphery of the current collector 1a.

As shown in FIG. 6A, the bipolar electrode BP₂ includes cathode layer 2b arranged on one surface of current collector 1b, and anode layer 3b arranged on the other surface of the current collector 1b. Further, the bipolar electrode BP₂ includes resin frame 51b arranged along with the outer periphery of the current collector 1b. The details of the bipolar electrode BP₂ are the same as the details of the bipolar electrode BP₁ described above.

As shown in FIG. 6A, the anode layer 3a in the bipolar electrode BP₁ and the cathode layer 2b in the bipolar electrode BP₂ are faced to each other interposing separator 4. On this occasion, at least a part of the outer periphery of the separator 4 is arranged between the resin frame 51a and the resin frame 51b. Also, as shown in FIG. 6A, nest 6 and resin frame (spacer) 51c are arranged between the resin frame 51a in the bipolar electrode BP₁ and the resin frame 51b in the bipolar electrode BP₂.

As shown in FIG. 6B, the bipolar electrode BP₁, the bipolar electrode BP₂, the separator 4, and the nest 6 are arranged, and then anode member AN including separator layer 4, anode layer 3 and current collector 1 is arranged on the cathode layer 2a in the bipolar electrode BP₁, and cathode member CA including separator layer 4, cathode layer 2 and current collector 1 is arranged on the anode layer 3b in the bipolar electrode BP₂. After that, the resin frames 51a, 51b and 51c are welded. Thereby, a power generating unit including the cathode layer 2b, the anode layer 3a, and the separator 4 is formed. Also, by welding the resin frames 51a, 51b, and 51c, the resin member 5 is formed. Further, the nest 6 is arranged to penetrate the resin member 5. In this manner, the electrode layered body in which the nest is inserted is obtained.

### 2. Liquid injection frame arranging step

This step is, as shown in FIG. 1B, a step of arranging liquid injection frame 20 made of a resin that includes liquid injection port P configured to supply a liquid electrolyte into the electrode layered body, in side surface SS of the electrode layered body 10. The liquid injection frame may be arranged by forming it in the side surface of the electrode layered body by a resin molding such as injection molding, and may be arranged in the side surface of the electrode layered body by preparing it as an additional member.

As shown in FIG. 2, the side surface SS of the electrode layered body 10 refers to a surface extending to the z axis direction in the electrode layered body 10. Also, the side surface of the electrode layered body is usually a surface connecting a top surface (one main surface) of the electrode layered body and a bottom surface (the other main surface) of the electrode layered body facing to each other in the z axis direction.

As shown in FIG. 1B, the liquid injection frame 20 preferably includes a plurality of liquid injection port P (P₁, P₂, P₃) configured to supply the liquid electrolyte into the electrode layered body 10. The liquid injection port P₁, P₂, and P₃ are respectively arranged to correspond to the power generating unit U₁, U₂, and U₃. Meanwhile, although not illustrated in particular, the liquid injection frame may include just one liquid injection port. The liquid injection port P is a part capable of supplying the liquid electrolyte in the x axis direction orthogonal to the z axis direction.

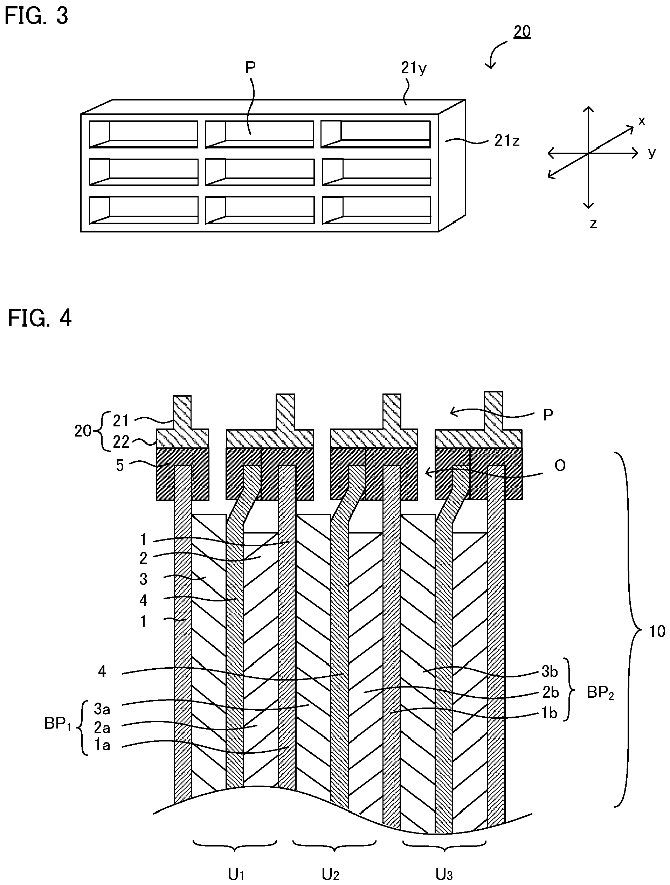

FIG. 3 is a schematic perspective view exemplifying the liquid injection frame in the present disclosure. As shown in FIG. 1B and FIG. 3, the liquid injection frame 20 usually includes partition wall part 21 that divides each liquid injection port P. The partition wall part 21 is welded to, for example, the resin member 5. The liquid injection frame 20 shown in FIG. 3 includes a plurality of liquid injection port P in the z axis direction, and includes a plurality of liquid injection port P in the y axis direction. Also, the partition wall part 21 includes a plurality of vertical wall 21z and a plurality of horizontal wall 21y. Each liquid injection port P is respectively divided by the vertical wall 21z and the horizontal wall 21y.

Examples of the resin configuring the liquid injection frame may include a thermoplastic resin. Examples of the thermoplastic resin may include polyolefin-based resins such as polypropylene (PP) and polyethylene (PE), and polyethylene terephthalate. Above all, a resin with resistance (resistance to liquid electrolyte) to the liquid electrolyte to be used is preferable. Also, it is preferably excellent in mechanical strength and formability. Examples of such a resin may include polyolefin-based resins such as polypropylene (PP) and polyethylene (PE). The liquid injection frame is arranged in the side surface of the electrode layered body. As shown in FIG. 1B, the liquid injection frame 20 is arranged in at least one side surface (side surface including communicating hole O) of the electrode layered body 10.

FIG. 4 is a schematic cross-sectional view exemplifying the electrode layered body in which the liquid injection frame in the present disclosure is arranged. As shown in FIG. 4, the liquid injection frame 20 may include base part 22 in addition to the partition wall part 21. The partition wall part 21 extends, for example, from the base part 22. The base part 22 is, for example, welded to the resin member 5.

The thickness of the liquid injection frame 20 is, for example, 1 mm or more and 20 mm or less, and may be 4 mm or more and 15 mm or less. The thickness of the liquid injection frame refers to, as shown in FIG. 1B, thickness (T₂₀) in the x axis direction orthogonal to the z axis direction.

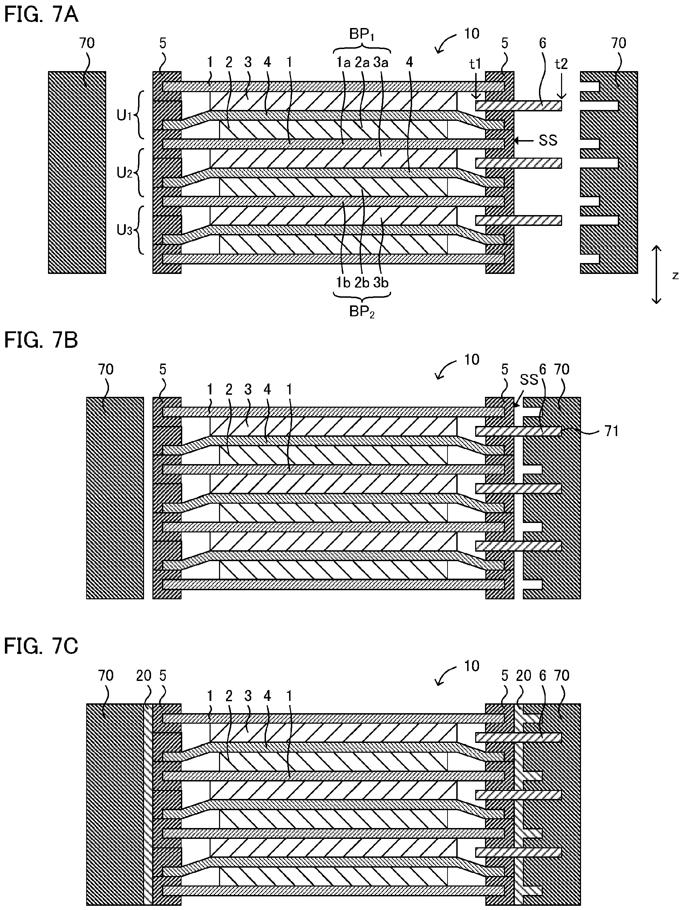

FIGS. 7A to 7C are schematic cross-sectional views (deal drawings) exemplifying the method for forming the liquid injection frame by injection molding in this step. As shown in FIG. 7A, the electrode layered body 10 in this step may include nest 6 configured to form a communicating hole, in side surface SS. Of the nest 6, one edge part t1 is positioned inside the electrode layer body 10, and the other edge part t2 protrudes to outside the side surface SS of the layered electrode body 10. The nest 6 is a part of a mold installed to mold 70 (matrix) and is a member configured to produce a resin molding product.

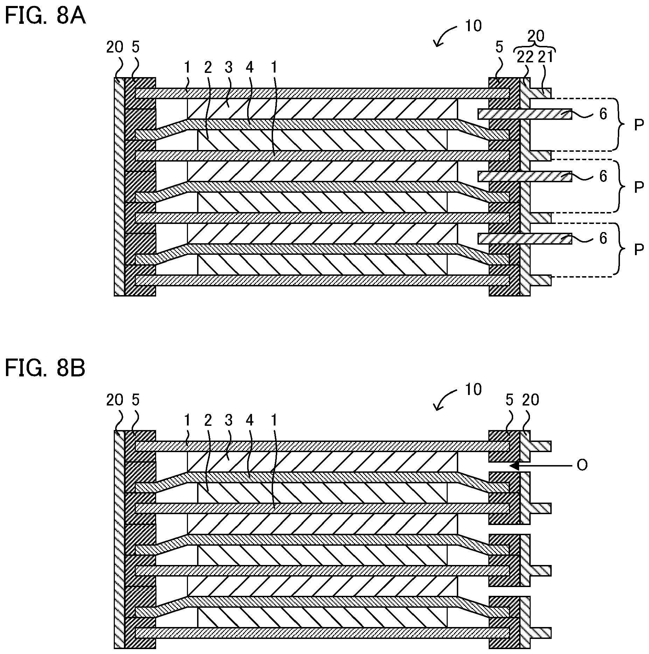

Next, as shown in FIG. 7B, the electrode layered body 10 that is an insert product is arranged in the mold 70 so that the side surface SS of the electrode layered body 10 and the surface where concave part 71 is formed in the mold 70 face to each other. The concave part 71 of the mold 70 is a part where the next 6 is inserted. Next, as shown in FIG. 7C, a resin is supplied between the electrode layered body 10 and the mold 70 to form the liquid injection frame (resin molding body) 20. Incidentally, although the description is omitted in FIG. 7C, when the liquid injection frame 20 is formed, usually, a mold is also arranged in up and down directions of the electrode layered body 10. Next, as shown in FIG. 8A, the mold 70 is removed from the electrode layered body 10. Thereby, the liquid injection frame 20 including the partition wall part 21 that divides each liquid injection port P, and the base part 22 is obtained. Next, as shown in FIG. 8B, when the nest 6 is removed from the electrode layered body 10, communicating hole O is formed in the resin member 5.

### 3. Liquid injection step

This step is a step of injecting a liquid electrolyte into the electrode layered body from the liquid injection port of the liquid injection frame. There are no particular limitations on the method for supplying the liquid electrolyte, and for example, conventionally known method using a liquid injection device may be used. As shown in FIG. 1B, the liquid electrolyte is introduced to the liquid injection port P, and supplied into the electrode layered body via communicating hole O. As a result, the liquid electrolyte is permeated to each of the cathode layer, the anode layer and the separator.

### 4. First sealing step

This step is a step of obtaining temporary sealed layered body 50 by sealing the liquid injection port P of the liquid injection frame 20 by arranging first member 30 including resin layer A (resin layer 31) on surface 20S of the liquid injection frame, of which normal direction is an x axis direction orthogonal to the z axis direction, after the liquid injection step as shown in FIG. 1C. "Surface of the liquid injection frame of which normal direction is an x axis direction orthogonal to the z axis direction" refers to a surface including an opening of the liquid injection port P, that is a surface of the liquid injection frame opposite side to the electrode layered body.

As shown in FIG. 1C, for example, heat bar 60 heated at a specified temperature is pushed against from a side of the first member 30 that is opposite to the liquid injection frame 20, and thus the first member 30 and the liquid injection frame 20 are welded and the liquid injection port P of the liquid injection frame 20 is sealed with the first member 30. Incidentally, means of welding and sealing are not particularly limited to the method above, and general heating means can be used. The first sealing step is preferably performed in a vacuumed chamber under reduced pressure atmosphere. Also, an adhesion inhibiting member such as a PET film and glass cloth may be put between the first member and the heat bar while conducting the welding and sealing in order to prevent the first member from adhering to the heat bar.

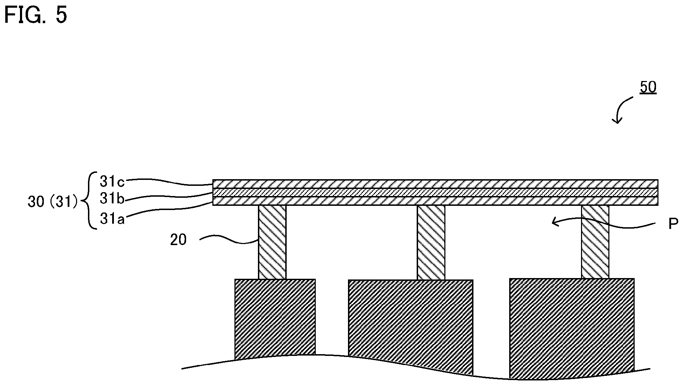

The first member includes a resin layer A. The resin layer A may be a single resin layer, and may include a plurality of resin layers. FIG. 5 is a schematic cross-sectional view exemplifying a temporary sealed layered body in the present disclosure when the first member 30 includes a plurality of resin layers as the resin layer A (resin layer 31). As shown in FIG. 5, the first member 30 may include, as the resin layer A (resin layer 31), a three-layer structure configured by first resin layer 31a, second resin layer 31b, and third resin layer 31c, from the liquid injection frame 20 side. It is preferable that the first resin layer 31a and the third resin layer 31c respectively include a thermoplastic resin. When the first resin layer 31a includes a thermoplastic resin, welding of the liquid injection frame 20 and the first member 30 becomes easy. Also, when the third resin layer 31c includes a thermoplastic resin, welding of the first member 30 and the second member 40 becomes easy. Also, when the second resin layer 31b is present between the first resin layer 31a and the third resin layer 31c, the strength of the first member can be improved.

Examples of the thermoplastic resin included in the first resin layer and the third resin layer may include an olefin-based resin. The olefin-based resin is a resin of which main component is an olefin component unit, and examples thereof may include a polyolefin such as polyethylene and polypropylene, and an acid-modified polyolefin such as acid-modified polyethylene and acid-modified polypropylene. The acid-modified polyolefin is polyolefin to which an acid group is introduced. There are no particular limitations on the kind of this acid group, but carboxylic acid anhydride residue (-CO-O-OC-) is preferred. The acid group may be introduced by any compound, and examples of the compound by which the acid group is introduced may include maleic anhydride. In the present disclosure, above all, acid-modified polypropylene is preferred. The reason therefor is because it can resist the increase of the internal pressure since it includes sufficient welding strength to the liquid injection frame, and it also has high resistance to liquid electrolyte. In particular, acid-modified polypropylene modified with maleic anhydride is preferred. The thermoplastic resin included in the first resin layer and the third resin layer may be the same kind and may be different kinds.

The resin included in the second resin layer is preferably a resin with high mechanical strength with excellent pressure resistance to the increase of the internal pressure in the battery treatment step. Examples of such a resin may include polyester such as polyethylene terephthalate, polybutylene terephthalate, and polyethylene naphthalate. Among them, polyethylene naphthalate is preferred.

The first member is preferably in a film shape. In particular, a resin film configured by a single resin layer, or a plurality of resin layers is preferred. When the first member is a resin film, the liquid injection port of the liquid injection frame can be easily sealed.

The thickness of the first member is not particularly limited, but it is preferably 100 um or more, and more preferably 120 um or more. Meanwhile, the thickness is preferably 200 um or less, and more preferably 180 um or less. The thickness of the first member is the thickness (T₃₀) in the x axis direction, as shown in FIG. 1C. Incidentally, when the first member is a layered body of plurality of layers, the thickness is the total thickness of the plurality of layers included in the first member.

There are no particular limitations on the conditions for welding and sealing (heating temperature, pushing-in distance, time and etc.) in the first sealing step. The heating temperature is preferably a temperature at which at least one of the resin included in the liquid injection frame 20 and the resin included in the resin layer A (when the resin layer A includes a plurality of resin layers, the first resin layer arranged in the liquid injection frame side) of the first member is softened or melted. The temperature is, for example, 80°C or more and 200°C or less, and may be 100°C or more and 180°C or less. The heating time is, for example, 10 seconds or more and 60 seconds or less, and may be 20 seconds or more and 60 seconds or less. The pushing-in distance is, for example, 0.2 mm or more and 1.0 mm or less, and may be 0.5 mm or more and 0.8 mm or less.

### 5. Battery treatment step

This step is a battery treatment step of performing at least one battery treatment of charging and aging after the first sealing step. As shown in FIG. 1D, by performing at least one of charging and aging to the temporary sealed layered body 50, the internal pressure of the temporary sealed layered body increases.

There are no particular limitations on the conditions for charging or aging. As the charging treatment, for example, an operation same as that of the case when a general lithium ion battery is initially charged may be performed. For example, the battery may be charged until the SOC (State of Charge) becomes 50% or more, may be charged until the SOC becomes 70% or more, and may be charged until the SOC becomes 90% or more. Examples of the aging treatment may include a high temperature aging treatment in which the temporary sealed layered body is kept at a high temperature region for a specified time. The aging temperature is, for example, 35°C or more and 85°C or less, and may be 40°C or more and 80°C or less. Also, the aging time may be 10 hours or more, and may be 20 hours or more.

### 6. Penetration hole forming step

This step is a step of forming a penetration hole Q communicating the liquid injection port P in the first member 30 after the battery treatment step, as shown in FIG. 1E. There are no particular limitations on the method for forming the penetration hole in the first member, and for example, a method of opening a hole using an appropriate punching tool (such as needle, punch, drill and etc.) and a method of opening a hole by irradiating high energy ray such as a laser to the firs member can be adopted.

The penetration hole Q preferably penetrates the first member 30 in the x axis direction. The first member 30 preferably includes a plurality of penetration hole Q. Also, in a plan view of the x axis direction, the penetration hole Q of the first member 30 is preferably overlapped with at least a part of the liquid injection port P of the liquid injection frame 20. The shape of the penetration hole in a plan view in the x axis direction is not particularly limited, and examples thereof may include circle and square.

### 7. Second sealing step

This step is a step of sealing the liquid injection port P while covering the penetration hole Q by using second member 40 including a resin layer B (resin layer 41) and metal layer 42, and arranging the resin layer B in the second member on surface 30S of the first member that is opposite side to the liquid injection frame, of which normal direction is the x axis direction, after the penetration hole forming step as shown in FIG. 1F.

As shown in FIG. 1F, the second member 40 includes the resin layer B (resin layer 41) and the metal layer 42. Also, the second member 40 preferably includes resin layer C (resin layer 43) in the opposite side to the resin layer B (resin layer 41) of the metal layer 42. Each of the resin layer B and the resin layer C is preferably a single resin layer.

The metal configuring the metal layer is not particularly limited if it can exhibit barrier properties, and examples thereof may include a metal such as aluminum, stainless, titanium, nickel, iron and copper, and an alloy including these. Thickness of the metal layer is preferably 10 um or more, and more preferably 30 um or more. Meanwhile, the thickness is preferably 180 um or less, and more preferably 150 um or less.

The resin layer B preferably includes a thermoplastic resin. When the resin layer B includes a thermoplastic resin, welding of the first member 30 and the second member 40 becomes easy. Examples of the thermoplastic resin included in the resin layer B may be the same as those exemplified for the first resin layer and the third resin layer in the first member. Above all, polyethylene is preferred. Also, examples of the resin included in the resin layer C may be the same as the resin included in the second resin layer in the first member. Above all, polyethylene terephthalate is preferred.

The second member 40 is preferably in a film shape. When the second member is in a film shape, the liquid injection port of the liquid injection frame can be easily welded and sealed while covering the penetration hole of the first member.

The thickness of the second member is not particularly limited, and it is preferably 100 um or more and more preferably 120 um or more. Meanwhile, the thickness is preferably 200 um or less, and more preferably 180 um or less. The thickness of the second member is a thickness (T₄₀) in the x axis direction as shown in FIG. 1F. Incidentally, when the second member is a layered body of plurality of layers, the thickness is the total thickness of the plurality of layers included in the second member. The reason therefor is to improve rigidity of the second member and to inhibit deformation during vacuum sealing.

The resin configuring the liquid injection frame, the resin included in the first resin layer and the third resin layer in the first member, and the resin included in the resin layer B in the second member are preferably the same kind, but they may be different kinds. When they are different kinds, among the resins, the absolute value of the difference between the resin with the largest solubility parameter (SP value) and the resin with the smallest SP value is preferably within 3. The reason therefor is to obtain high weldability.

As shown in FIG. 1F, for example, when heat bar 60 heated at a specified temperature is pushed against from an opposite side to the first member 30 of the second member 40, the first member 30 and the second member 40 are welded, and thereby the liquid injection port P is sealed while the second member 40 covers the penetration hole Q. Incidentally, the welding means is not limited to the method above, and general heating means can be used. The second sealing step is preferably performed in a vacuumed chamber under reduced pressure atmosphere.

There are no particular limitations on the conditions for welding and sealing (heating temperature, pushing-in distance, time and etc.) in the second sealing step. The heating temperature is preferably a temperature at which at least one of the resin included in the resin layer A (when the resin layer A includes a plurality of resin layers, the third resin layer arranged in the second member side) of the first member and the resin included in the resin layer B in the second member is softened or melted. The heating temperature is, for example, 80°C or more and 200°C or less, and may be 100°C or more and 180°C or less. The heating time is, for example, 10 seconds or more and 60 seconds or less, and may be 20 seconds or more and 60 seconds or less. The pushing-in distance is, for example, 0.2 mm or more and 3.0 mm or less, and may be 0.5 mm or more and 2.0 mm or less.

### 8. Layered battery

The layered battery produced by the method for producing a layered battery in the present disclosure is in the same contents as those described in "B. Layered battery" later.

### B. Layered battery

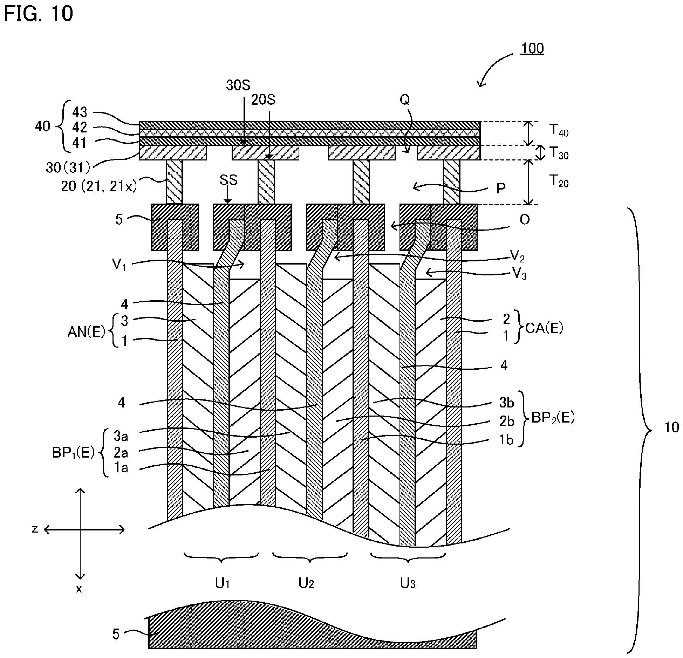

FIG. 10 is a schematic cross-sectional view exemplifying the layered battery in the present disclosure. As shown in FIG. 10, layered battery 100 includes electrode layered body 10 including a plurality of electrode E layered in a z axis direction. The layered battery 100 includes the electrode layered body 10, liquid injection frame 20 made of a resin that is arranged in side surface SS of the electrode layered body 10, and includes liquid injection port P configured to supply a liquid electrolyte into the electrode layered body 10, first member 30 of which normal direction is an x axis direction orthogonal to the z axis direction, arranged on surface 20S of the liquid injection frame 20 that is opposite side to the electrode layered body 10, and second member 40 of which normal direction is the x axis direction, arranged on surface 30S of the first member 30 that is opposite side to the liquid injection frame 20. The first member 30 includes a resin layer A (resin layer 31), and penetration hole Q covering the liquid injection port P and communicating the liquid injection port P. The second member 40 includes layers in the order of a resin layer B (resin layer 41) and metal layer 42 from the first member 30 side, and seals the liquid injection port P while covering the penetration hole Q. The electrode layered body 10 in FIG. 10 includes bipolar electrode BP₁ and BP₂.

In the layered battery in the present disclosure, the first member including the penetration hole is arranged between the second member and the liquid injection frame, and thus the degrade in structural reliability due to the internal pressure increase in the battery treatment step in the production steps can be inhibited.

Also, according to the present disclosure, as shown in FIG. 10, the first member 30 is arranged between the liquid injection frame 20 and the second member 40, and thus short circuit can be inhibited even when the metal layer 42 of the second member 40 is exposed since there is a distance to adjacent liquid injection port.

Further, according to the present disclosure, the first member includes the penetration hole, and thus gas accumulation between the first member and the second member is inhibited, and the layered battery will be capable of preventing the peeling between the first member and the second member.

### 1. Electrode layered body

The layered battery in the present disclosure includes the electrode layered body 10 including a plurality of electrode E layered in the z axis direction as shown in FIG. 10. The electrode layered body is in the same contents as those described in "A. Method for producing layered battery" above. Also, each of the cathode layer 2, the anode layer 3 and the separator 4 is impregnated with a liquid electrolyte.

### 2. Liquid injection frame

The layered battery in the present disclosure includes liquid injection frame 20 made of a resin that is arranged in side surface SS of the electrode layered body 10, and includes liquid injection port P configured to supply a liquid electrolyte into the electrode layered body, as shown in FIG. 10. The liquid injection frame is in the same contents as those described in "A. Method for producing layered battery" above.

### 3. First member

The first member in the present disclosure, of which normal direction is an x axis direction orthogonal to the z axis direction, is arranged on surface 20S of the liquid injection frame 20 that is opposite side to the electrode layered body 10 as shown in FIG. 10. Also, the first member 30 includes a resin layer A (resin layer 31), and penetration hole Q covering the liquid injection port P and communicating the liquid injection port P. It is preferable that the first member 30 is welded to the liquid injection frame 20. The first member and the penetration hole in the first member are in the same contents as those described in "A. Method for producing layered battery" above.

### 4. Second member

The layered battery in the present disclosure includes second member 40, of which normal direction is the x axis direction, arranged on surface 30S of the first member 30 that is opposite side to the liquid injection frame 20, as shown in FIG. 10.

Also, the second member includes layers in the order of a resin layer B and a metal layer from the first member side, and seals the liquid injection port while covering the penetration hole. As shown in FIGS. 1A to 1F, the second member 40 seals the liquid injection port P of the liquid injection frame 20 while covering the penetration hole Q of the first member 30. The second member 40 is preferably welded to the first member 30. The second member is in the same contents as those described in "A. Method for producing layered battery" above.

### 5. Others

The layered battery in the present disclosure usually includes a liquid electrolyte permeated to the electrode layered body. As the liquid electrolyte, for example, conventionally known organic liquid electrolyte used for a lithium ion secondary battery can be appropriately used.

### 6. Layered battery

Specific examples of the layered battery in the present disclosure may include a secondary battery (such as a lithium ion secondary battery) and an electric double layered capacitor. Also, examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery in the present disclosure may be used as a power source for moving bodies other than vehicles (such as rail road transportation, vessel and airplane), and may be used as a power source for electronic products such as information processing equipment.

### Examples

Hereinafter, the present disclosure will be described more specifically with reference to Examples.

### [Experimental Example]

Film 1 to film 4 were prepared and evaluations as below were performed.

Film 1 had a three-layer structure configured by a first resin layer (PE layer) including polyethylene, a second resin layer (PET layer) including polyethylene terephthalate, and a third resin layer (PE layer) including polyethylene.

Film 2 had a two-layer structure configured by a first resin layer (PE layer) including polyethylene, and a second resin layer (PET layer) including polyethylene terephthalate.

Film 3 had a four-layer structure configured by a first resin layer (PPa layer) including acid-modified polypropylene, a second resin layer (PEN layer) including polyethylene naphthalate, a third resin layer (PPa layer) including acid-modified polypropylene, and a fourth resin layer (PEa layer) including acid-modified polyethylene, and further included a mold release PET layer on a surface of the fourth resin layer side. The thickness of the film 3 excluding the mold release PET layer was 105 µm.

Film 4 had a three-layer structure configured by a first resin layer (PPa layer) including acid-modified polypropylene, a second resin layer (PEN layer) including polyethylene naphthalate, and a third resin layer (PPa layer) including acid-modified polypropylene, and it was a film having a thickness of 72 um.

Incidentally, the acid-modified polypropylene and the acid-modified polyethylene in the film 3 and the film 4 were respectively maleic acid anhydride-modified polypropylene and maleic acid anhydride-modified polyethylene.

### [Experimental Example 1]: Productivity evaluation

The film 1 was arranged on the liquid injection frame and a hot plate was pushed against from the above to weld and seal the liquid injection port. Right after welding the film 1, when the film was easily peeled off from the hot plate and if there were no adhesion of the film to the hot plate and fluidity of the resin, it was evaluated as A. On the other hand, when the film was adhered to the hot plate and the resin flowed, it was evaluated as B. The results are shown in Table 1. In the film 1, there was a melting flow in the PE layer.

The film 2 to the film 4 were evaluated in the same manner as to the film 1. The film 2 was arranged so that the first resin layer side including polyethylene faced to the liquid injection frame, and welded. In the film 2, the welding with the hot plate was suppressed by the PET layer. The film 3 was arranged so that the first resin layer side including the acid-modified polypropylene faced to the liquid injection frame, and welded. In the film 3, the welding with the hot plate was suppressed by the mold release PET layer. In the film 4, the welding with the hot plate was suppressed by welding interposing the PET film and glass cloth.

### [Experimental Example 2]: Liquid electrolyte resistance evaluation

The film 4 was welded on the liquid injection frame to seal the liquid injection port. To the liquid injection frame with the film welded, a liquid electrolyte (prepared by dissolving liquid electrolyte LiPF₆ in a mixture solvent of EC/DMC/EMC = 3/4/3 in 1.1 M) was filled, sealed and kept at 65°C for 80 hours. After that, a pressure resistance evaluation was performed, and when the pressure resistance value was 0.40 MPa or more, it was evaluated as A.

**[Table 1]**

| | Productivity evaluation | Liquid electrolyte resistance evalution |
|---|---|---|
| Film 1 | B | Not evaluated |
| Film 2 | A | Not evaluated |
| Film 3 | A | Not evaluated |
| Film 4 | A | A |

### [Experimental Example 3]: Pressure resistance evaluation

The liquid injection frame that was an injection molding product was used, and the film 4 was arranged on the liquid injection frame and a hot plate was pushed against from the above to weld and seal the liquid injection port. The liquid injection frame side was fixed in a pedestal, and compressed air was injected from the down side that is opposite to the film 1 of the liquid injection frame. The internal pressure of the liquid injection frame was gradually increased, and a pressure (pressure resistance value) until the film 1 was peeled off from the liquid injection frame or broken was measured (Experimental Example 3-1). Also, the pressure resistance evaluation was performed using the film 5 including layers in the order of a PET layer, a metal aluminum layer, and a PE resin layer, in the same manner as in the above except that the PE layer in the film 5 was arranged to face to the liquid injection frame (Reference Example). Also, the film 4 was used, and the film 4 was welded to the liquid injection frame, and then further, the film 5 was welded to the film 4. The pressure resistance evaluation was performed in the same manner as the above, and the pressure resistance value was measured (Experimental Example 3-2). The results are shown in Table 2.

**[Table 2]**

| | Pressure resistance value |
|---|---|
| Experimental Example 3-1 | 0.4MPa |
| Reference Example | 0.7MPa |
| Experimental Example 3-2 | 0.5MPa |

It was confirmed that although the pressure resistance strength decreased, sufficient pressure resistance strength to the increase of internal pressure was obtained when the film 4 was welded under the film 5 (Experimental Example 3-2) compared to when the liquid injection frame was directly sealed with the film 5 (Reference Example).

The present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Reference Sings List

- 1: current collector
- 2: cathode layer
- 3: anode layer
- 4: separator
- 5: resin member
- 6: nest
- 10: electrode layered body
- 20: liquid injection frame
- 30: first member
- 40: second member
- 100: layered battery
- O: communicating hole
- P: liquid injection port
- Q: penetration hole

## Claims

1. A method for producing a layered battery, the method **characterized by** comprising:
a preparing step of preparing an electrode layered body including a plurality of electrode layered in a z axis direction;
an arranging step of arranging a liquid injection frame made of a resin including a liquid injection port, in a side surface of the electrode layered body;
a liquid injection step of injecting a liquid electrolyte into the electrode layered body from the liquid injection port of the liquid injection frame;
a first sealing step of sealing the liquid injection port by arranging a first member including a resin layer A on a surface of the liquid injection frame, of which normal direction is an x axis direction orthogonal to the z axis direction, after the liquid injection step;
a battery treatment step of performing at least one of charging and aging after the first sealing step;
a penetration hole forming step of forming a penetration hole communicating the liquid injection port in the first member after the battery treatment step; and
a second sealing step of sealing the liquid injection port while covering the penetration hole by using a second member including a resin layer B and a metal layer, and arranging the resin layer B in the second member on a surface of the first member of which normal direction is the x axis direction.

2. The method for producing a layered battery according to claim 1, **characterized in that** the first member and the second member are in a film shape.

3. The method for producing a layered battery according to claim 1, **characterized in that** the first member includes a plurality of resin layer as the resin layer A.

4. The method for producing a layered battery according to claim 1, **characterized in that** the second member includes a resin layer C on the metal layer that is opposite side to the resin layer B.

5. The method for producing a layered battery according to claim 1, **characterized in that** the electrode layered body includes a bipolar electrode including a current collector, a cathode layer arranged on one surface of the current collector, and an anode layer arranged on the other surface of the current collector.

6. A layered battery **characterized by** comprising:
an electrode layered body including a plurality of electrode layered in a z axis direction;
a liquid injection frame made of a resin that is arranged in a side surface of the electrode layered body, and includes a liquid injection port configured to supply a liquid electrolyte into the electrode layered body;
a first member of which normal direction is an x axis direction orthogonal to the z axis direction, arranged on a surface of the liquid injection frame that is opposite side to the electrode layered body; and
a second member of which normal direction is the x axis direction, arranged on a surface of the first member that is opposite side to the liquid injection frame, wherein
the first member includes a resin layer A, and a penetration hole covering the liquid injection port and communicating the liquid injection port; and
the second member includes layers in the order of a resin layer B and a metal layer from the first member side, and seals the liquid injection port while covering the penetration hole.

7. The layered battery according to claim 6, **characterized in that** the first member and the second member are in a film shape.

8. The layered battery according to claim 6, **characterized in that** the first member includes a plurality of resin layer as the resin layer A.

9. The layered battery according to claim 6, **characterized in that** the second member includes a resin layer C on the metal layer that is opposite side to the resin layer B.

10. The layered battery according to claim 6, **characterized in that** the electrode layered body includes a bipolar electrode including a current collector, a cathode layer arranged on one surface of the current collector, and an anode layer arranged on the other surface of the current collector.
